(19) Europäisches Patentamt / European Patent Office / Office européen des brevets

(11) **EP 2 860 417 B1**

(12) **EUROPEAN PATENT SPECIFICATION**

(45) Date of publication and mention
of the grant of the patent:
**23.12.2020 Bulletin 2020/52**

(21) Application number: **13800708.3**

(22) Date of filing: **29.05.2013**

(51) Int Cl.:
*F16C 27/04* *(2006.01)*      *F16C 19/52* *(2006.01)*
*F16C 19/26* *(2006.01)*      *F16C 25/08* *(2006.01)*

(86) International application number:
**PCT/JP2013/064897**

(87) International publication number:
**WO 2013/183517 (12.12.2013 Gazette 2013/50)**

(54) **ROLLIING BEARING SYSTEM**

WÄLZLAGERSYSTEM

SYSTEME DE PALIER À ÉLÉMENTS DE ROULANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.06.2012 JP 2012131172**

(43) Date of publication of application:
**15.04.2015 Bulletin 2015/16**

(73) Proprietor: **Kato, Heizaburo
Shizuoka 439-0019 (JP)**

(72) Inventor: **Kato, Heizaburo
Shizuoka 439-0019 (JP)**

(74) Representative: **Keenway Patentanwälte
Neumann Heine Taruttis
PartG mbB
Postfach 10 33 63
40024 Düsseldorf (DE)**

(56) References cited:
**EP-A2- 2 110 519        DE-A1-102009 058 355
DE-A1-102009 058 355   DE-A1-102010 048 381
DE-U1- 8 703 335        GB-A- 2 107 002
JP-A- H06 173 714       JP-A- H08 174 306
JP-A- H08 177 852       JP-A- S51 132 351
JP-A- 2003 139 134      JP-A- 2004 162 743
JP-A- 2004 169 756      JP-A- 2008 039 228
JP-A- 2008 121 788      US-A- 3 738 719
US-A- 4 033 645**

**Description**

Technical Field

The invention relates to a rolling bearing system including a pressing mechanism that presses a plurality of rolling elements against an outer ring and an inner ring in the radial direction.

Background Art

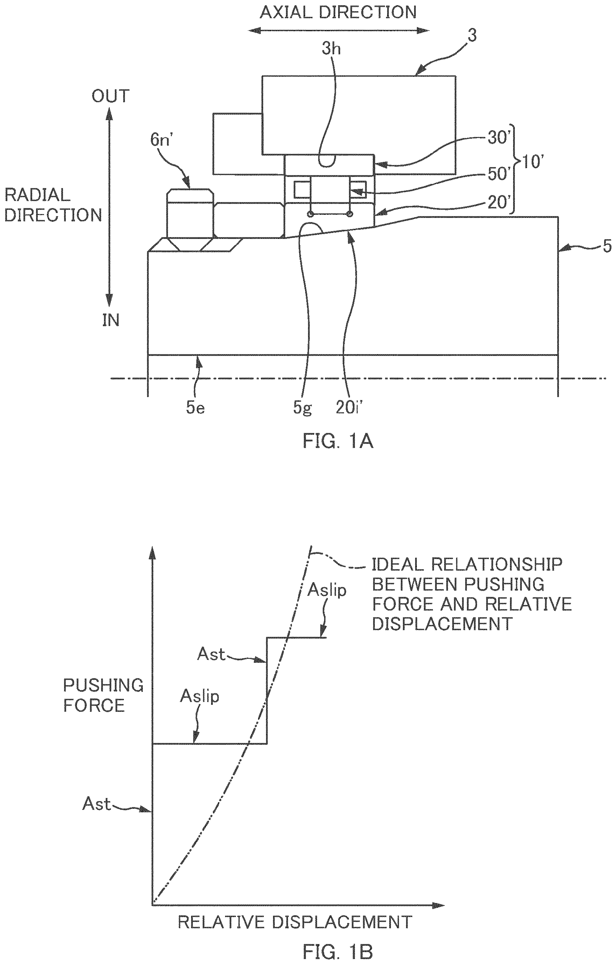

As conventional rolling bearings, a cylindrical roller bearing 10' shown in FIG. 1A are used. The cylindrical roller bearing 10' has a plurality of cylindrical rolling elements 50' between an inner ring 20' and an outer ring 30'. The difference in peripheral speeds between the rolling elements 50' and the inner ring 20' and the difference in peripheral speeds between the rolling elements 50' and the outer ring 30' are small because of cylindrical shapes of the rolling elements 50'; and the coefficient of rolling friction is therefore small. Also, the type of contacts between the rolling elements 50' and the inner ring 20' and between the rolling elements 50' and the outer ring 30' is line contact. The cylindrical roller bearing 10' has therefore an excellent ability to support radial load. For these reasons, the cylindrical roller bearing 10' is usually employed to support the shaft 5 of a machine tool.

Such a cylindrical roller bearing 10' is preloaded in the radial direction, in order to prevent smearing (damage due to sliding of the rolling elements 50' relative to the inner ring 20' and the outer ring 30') and to increase rotational rigidity, running accuracy, and the like. In other words, the rolling elements 50' in advance are pressed against the inner ring 20' and the outer ring 30' in the radial direction at a certain pressing force.

With reference to FIG. 1A, this common method of preloading the bearing will be described below. The outer ring 30' of the cylindrical roller bearing 10' is first fixed to the attachment hole 3h of the apparatus's the housing 3 in such a manner as not to permit the relative movement. The inner surface 20i' of the inner ring 20' is tapered; the inner surface 20i' abuts the tapered outer surface 5g of a shaft member 5, which is the supported object. A nut member 6n' which serves as a set screw and is screwed into an axial end section 5e of the shaft member 5 is screwed and rotates in a direction in which the screw is tightened, and the nut member 6n' moving in the axial direction pushes the inner ring 20' in the axial direction. In this case, because of wedge effect caused by abutting of the tapered surfaces 20i' and 5g, diameter-expanding deformation in the radial direction occurs to the inner ring 20' in accordance with the pushing. And, the inner ring 20' pushes radially outwardly the rolling elements 50' towards the outer ring 30'. The bearing 10' is consequently preloaded, in which the rolling elements 50' are pressed against the inner ring 20' and the outer ring 30'.

However, when pushing the inner ring 20', a so-called stick-slip behavior may occur due to metallic contact between the tapered surface 20i' of the inner ring 20' and the tapered surface 5g of the shaft member 5. That is, when pushing the inner ring 20' in the axial direction, the tapered surface 20i' of the inner ring 20' is displaced relative to the tapered surface 5g of the shaft member 5. In this case, the tapered surface 20i' repeats alternately moving and ceasing.

FIG. 1B is a graph illustrating this behavior. The vertical axis is the magnitude of pushing force applied on the inner ring 30' in the axial direction, and the horizontal axis is the relative displacement of the inner ring 20' relative to the housing 3. As can be seen from the graph, there are stick ranges Ast in which no relative displacement occurs though the pushing force increases, and slip ranges Aslip in which relative displacement occurs though the pushing force does not increase. That is, in the foregoing method of preloading the bearing with the tapered surfaces 20i' and 5g sliding relative to each other, it is difficult to set, within a suitable range, the pressing force by which the rolling elements 50' are pressed against the inner ring 20' and the outer ring 30'.

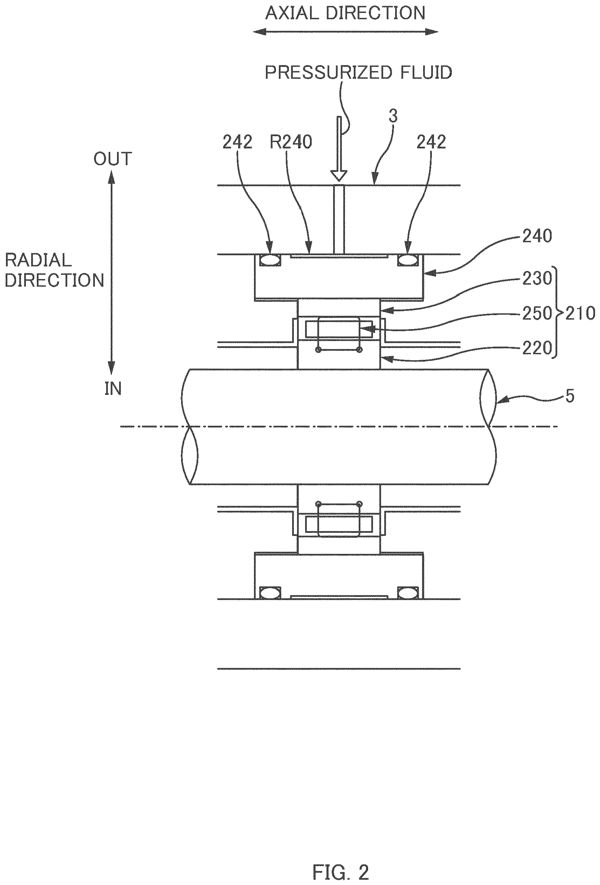

Japanese Patent Application Laid-open Publication No. 8-174306 discloses, regarding this aspect, a cylindrical roller bearing 210 which can avoid stick-slip behavior caused when preloading the bearing. FIG. 2 is a schematic central sectional view thereof. A preload adjusting ring 240 is provided radially outside of the outer ring 230 of the cylindrical roller bearing 210. A pressure chamber R240 is provided between the preload adjusting ring 240 and the housing 3. Supplying pressurized fluid to the pressure chamber R240 from the outside causes diameter-reducing deformation of the preload adjusting ring 240 in the radial direction, and thereby, the diameter of the outer ring 230 reduces. As a result, the rolling elements 250 are pressed against the outer ring 230 and the inner ring 220.

From GB 2 107 002 A journal bearings are known comprising a radially movable piston having flanges defining a chamber into which an oil can be supplied.

Summary of the Invention

Technical Problem

After applying the pressing force to the cylindrical roller bearing 210, the machine tool is used for processing such as cutting and the like. When radial load acts on the shaft member 5 during its use, the radial load has to be transmitted radially outwardly from the shaft member 5 to the inner ring 220 to the rolling elements 250 to the outer ring 230 to the preload adjusting ring 240, and be certainly transmitted to the housing 3 eventually.

However, there is the pressure chamber R240 between the housing 3 and the preload adjusting ring 240, and the pressure chamber R240 is supported by a pair of O-rings 242 and 242 provided on both sides thereof. That is, radial load is supported by the O-rings 242 with low rigidity. Thus, if the O-rings 242 are subjected to large radial load, the O-rings 242 may not be able to support the radial load; then, the O-rings 242 may be deformed easily and considerably by the pressing. Consequently, it is considered that such a cylindrical roller bearing 210 is difficult to be applied to apparatuses such as machine tools for which large radial load is expected.

The invention has been made in view of the above conventional problems, and an advantage thereof is to provide a rolling bearing in which radial load can be securely supported while facilitating control of pressing force, the rolling bearing including a pressing mechanism which presses a plurality of rolling elements against an outer ring and an inner ring in the radial direction.

Solution to Problem

An aspect of the invention to achieve the above advantage is a rolling bearing system according to claim 1. The rolling bearing includes in particular:

an outer ring;
an inner ring;
a ring member; and
a plurality of rolling elements that roll while in contact with the outer ring and the inner ring in a radial direction,
the outer ring including:

an annular section whose inner surface has a rolling motion surface on which the rolling elements roll; and
a projecting section

that projects radially outwardly while being connected in an integrated manner with an axial end of the annular section, and
that serves as a fixing section for fixing the outer ring to a certain supported-object member (a housing),

the ring member being provided outside an outer surface of the annular section,
the ring member covering the outer surface around an entire circumference of the outer surface,
the ring member and the outer surface partitioning an annular space therebetween,
the rolling elements being pressed against the outer ring and the inner ring by diameter reduction of the annular section due to elastic deformation of the annular section in the radial direction,
the elastic deformation being caused by pressurized fluid supplied to the annular space.

Other features of this invention will become apparent from the description in this specification and the attached drawings.

Effects of the Invention

According to the invention, in a rolling bearing including a pressing mechanism which presses a plurality of rolling elements against an outer ring and an inner ring in the radial direction, it is possible to securely support radial load while facilitating control of pressing force.

BRIEF DESCRIPTION OF THE DRAWINGS

FIG. 1A is a schematic central sectional view of a conventional cylindrical roller bearing 10' which can be preloaded, and FIG. 1B is a graph illustrating stick-slip behavior which is likely to occur when preloading the bearing.
FIG. 2 is a schematic central sectional view of a cylindrical roller bearing 210 which can avoid stick-slip behavior which is likely to occur when preloading the bearing.
FIG. 3A is a schematic central sectional view of a rolling bearing 10 of the present embodiment, and FIG. 3B is a cross-sectional view taken along line B-B in FIG. 3A.
FIG. 4 is a magnified view of section IV in FIG. 3A.

FIG. 5A is a schematic central sectional view of the rolling bearing 10 in a non-pressurized state of a pressure chamber 40R, and FIG. 5B is a schematic central sectional view of the rolling bearing 10 in a pressurized state of the pressure chamber 40R.

FIG. 6A is an explanatory diagram of a cylinder model used in consideration on the thickness of an annular section 32 of the outer ring 30, and FIG. 6B is an explanatory diagram of a supporting structure model used in consideration on the rigidity of the annular section 32.

FIG. 7 is a schematic central sectional view of an application example of the rolling bearing 10 of the present embodiment.

FIG. 8 is a schematic central sectional view of a rolling bearing 10a of other embodiment.

Mode for Carrying Out the Invention

With the description and the accompanied drawings, at least the following matters will be apparent.

A rolling bearing, including:

an outer ring;
an inner ring;
a ring member; and
a plurality of rolling elements that roll while in contact with the outer ring and the inner ring in a radial direction,
the outer ring including:

an annular section whose inner surface has a rolling motion surface on which the rolling elements roll; and
a projecting section

that projects radially outwardly while being connected in an integrated manner with an axial end of the annular section, and
that serves as a fixing section for fixing the outer ring to a certain supported-object member,

the ring member being provided outside an outer surface of the annular section,
the ring member covering the outer surface around an entire circumference of the outer surface,
the ring member and the outer surface partitioning an annular space therebetween,
the rolling elements being pressed against the outer ring and the inner ring by diameter reduction of the annular section due to elastic deformation of the annular section in the radial direction,
the elastic deformation being caused by pressurized fluid supplied to the annular space.

With such a rolling bearing, since the annular section is subjected to diameter reduction due to elastic deformation in the radial direction according to the supply of the pressurized fluid, the rolling elements are pressed against the outer ring and the inner ring. Thus, it is possible to effectively avoid the occurrence of stick-slip behavior during the pressing process. The pressing force between the rolling elements and the outer ring and the inner ring can therefore vary smoothly and quickly, substantially in accordance with the magnitude of the fluid-supply pressure of the pressurized fluid. Consequently, it is possible to precisely apply the pressing force, which makes it easy to control preloading (control the pressing force).

Since the pressing force varies quickly according to the fluid-supply pressure of pressurized fluid, the magnitude of the pressing force can be adjusted to any desirable value smoothly and freely. It is therefore possible to satisfy such demands for varying the pressing force, without any problem.

The outer ring further includes the fixing section that is provided in an integrated manner in the annular section on which the rolling elements roll. Through the fixing section, the outer ring is fixed to a supported-object member such as the housing of a suitable apparatus. This makes it possible to transmit quickly radial load to the supported-object member through the fixing section, the radial load being transmitted to the annular section through the rolling elements. Thus, radial load can be securely supported.

Furthermore, since the annular space to which the pressurized fluid is supplied is adjacent to and in contact with the outer surface of the annular section of the outer ring, the fluid-supply pressure acts directly on the annular section. It is therefore certain that the annular section is subject to the diameter-reducing deformation by supplying the pressurized fluid. This makes it possible to press securely the rolling elements against the outer ring and the inner ring.

In such a rolling bearing, it is desirable that
the rolling bearing further comprises an annular seal member,
the annular seal member abutting the annular section and the ring member and is placed between the annular section and the ring member,

the annular seal member preventing the pressurized fluid from leaking from the annular space,
the seal member is arranged in both axial ends of the ring member, and
the seal member is made of rubber or resin.

With such a rolling bearing, since the seal member increase the hermeticity of annular space, it is possible to certainly prevent the pressurized fluid from leaking to outside. In addition, though the annular section and the seal member slightly slide when the annular section is subject to diameter reduction due to elastic deformation during the process of applying the pressing force, such a seal member which is made of rubber or resin makes it possible to effectively avoid the occurrence of stick-slip behavior due to metallic contact.

In such a rolling bearing, it is desirable that
a central position of the rolling element is located in the opposite side of the fixing section in the axial direction with respect to a central position of the annular space in the axial direction.

With such a rolling bearing, the rolling elements are arranged at positions away from the fixing section of the outer ring. Radial pressing force is therefore applied to the rolling elements due to the diameter-reducing deformation of the portion of the annular section which is located away from the fixing section. At this stage, since being remote from the fixing section, the foregoing remote portion is less likely to be subject to radial constraining force caused by an attached-object member, the constraining force being able to reach the annular section through the fixing section. As a result, diameter-reducing deformation occurs to the remote portion substantially evenly through the entire length in the axial direction. This makes it possible to effectively prevent pressing force in the radial direction from causing uneven contact, the pressing force acting on rolling elements. In other words, it is possible to apply the pressing force uniformly with respect to the axial direction. Consequently, it is possible to increase the running accuracy and rotational rigidity of the rolling bearing.

In such a rolling bearing, it is desirable that
diameter expansion due to elastic deformation occurs to the ring member by supplying the pressurized fluid to the annular space,
an outer surface of the projecting section abuts the supported-object member and is fixed to the supported-object member, when the projecting section is fixed to the supported-object member, an outside diameter of the projecting section is set so that a space to allow for diameter expansion of the ring member due to elastic deformation of the ring member is formed outside an outer surface of the ring member, the space being adjacent to and in contact with the outer surface of the ring member.

With such a rolling bearing, when the projecting section is fixed to the supported-object member, the space to allow for diameter expansion of the ring member due to elastic deformation thereof is formed outside an outer surface of the ring member, the space being adjacent to and in contact with the outer surface. That is, Outside the outer surface of the ring member, there is therefore no member which causes the reaction on the outer surface. Thus, the fluid-supply pressure of the pressurized fluid inside the annular space is exactly converted to a radial pressing force. This causes diameter-reducing deformation of the annular section in accordance with the fluid-supply pressure of the pressurized fluid alone; and thus, the diameter-reducing deformation occurs to the annular section substantially evenly around the entire circumference thereof. As a result, the pressing force applied to the rolling elements is substantially even around the entire circumference of the rolling bearing, which can increase the running accuracy and rotational rigidity of the rolling bearing.

=== Present Embodiment ===

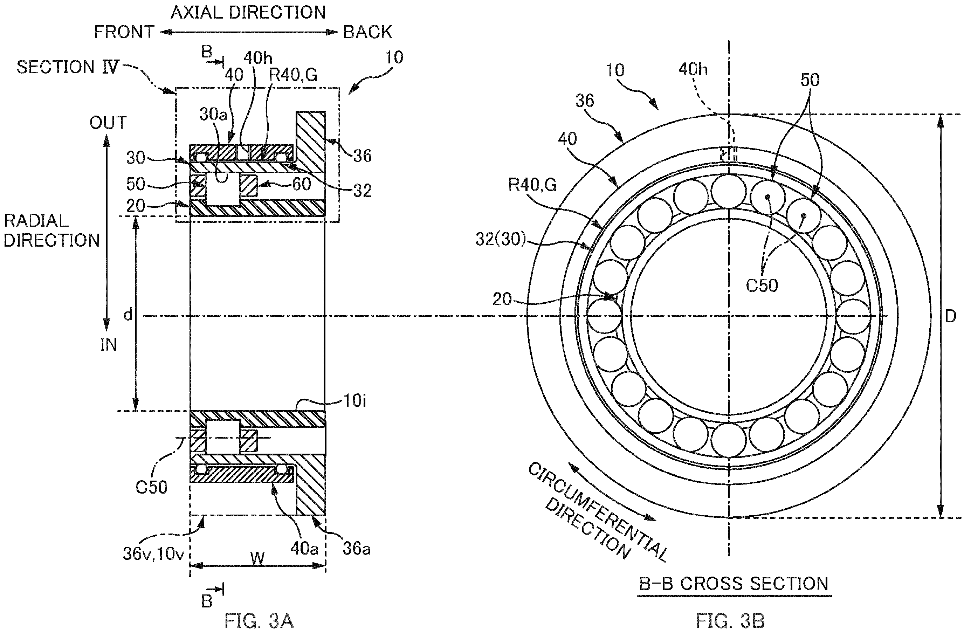

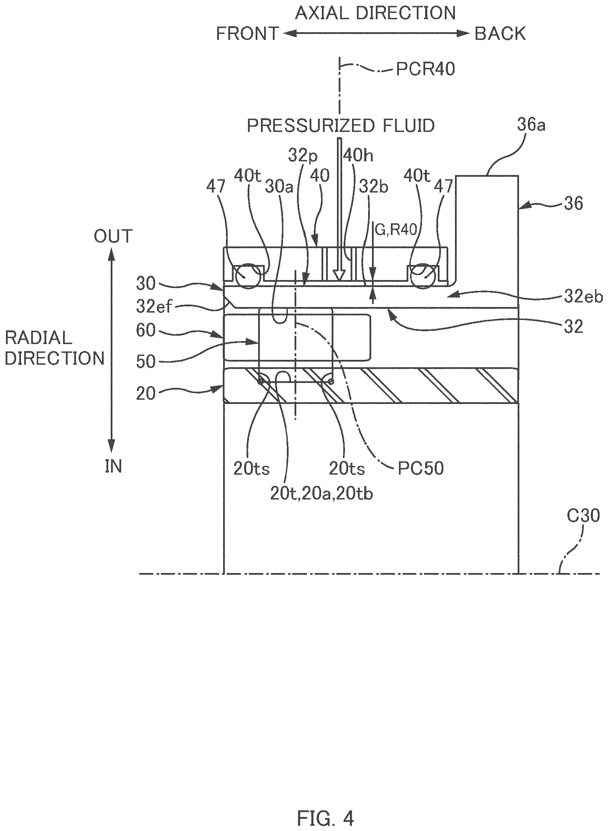

FIG. 3A is a schematic central sectional view of the rolling bearing 10 of the present embodiment, and FIG. 3B is a cross-sectional view taken along line B-B in FIG. 3A. FIG. 4 is a magnified view of section IV in FIG. 3A.

In the description below, the direction along the axis of the rolling bearing 10 is referred to as an "axial direction" or a "front-and-back direction", and the radial direction of the rolling bearing 10 is referred to as a "radial direction" or an "in-and-out direction". The direction around the circumference of the rolling bearing 10 at each point is merely referred to as a "circumferential direction". In some of the cross-sectional views described below, a part of hatchings that should be provided on cross-sectional parts is omitted for some of the members in order to avoid confusion between the drawings.

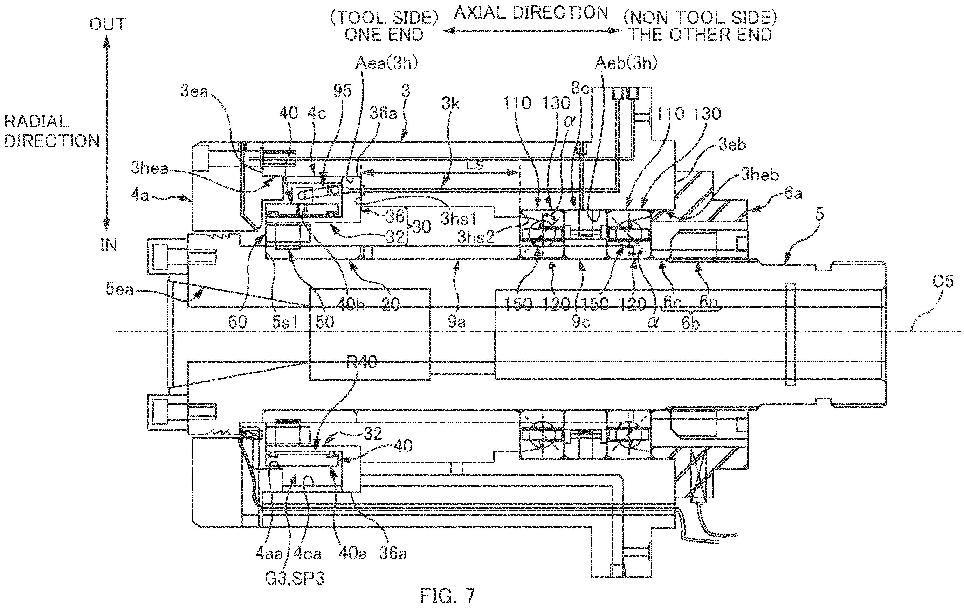

The rolling bearing 10 causes a shaft member 5 (e.g., a shaft) to be rotatably supported in the housing 3 of a suitable apparatus (e.g., machine tool) (See FIG. 7). During its use, the rolling bearing 10 supports the shaft member 5 rotatably as follows: for example, the outer ring 30 of the rolling bearing 10 is fitted into an attachment hole 3h of the housing 3, and the inner surface of the inner ring 20 is fitted to the shaft member 5, which is the supported object.

As shown in FIGS. 3A and 3B, the rolling bearing 10 of the present embodiment is in the category of so-called single-row cylindrical roller bearings. That is, since the rolling bearing 10 is single-row bearing, a plurality of rolling elements 50 are arranged between the inner ring 20 and the outer ring 30 in a line along the circumferential direction. Also, since the rolling bearing 10 is a cylindrical roller bearing 10, the rolling elements 50 are cylindrical bodies each having a perfectly circular cross section, and the rotation axis C50 of each rolling element 50 is parallel to the axial direction. The rolling bearing 10 has therefore a high ability to support radial load. The avoidance of the contact of the rolling elements 50 and 50 which are adjacent along the circumferential direction is achieved by an annular cage 60. For example, the cage 60 includes holes each of which accommodates the rolling elements 50 individually, which makes it possible to avoid the contact of the rolling elements 50 and 50.

The rolling bearing 10 has a preloading mechanism, that is, a pressing mechanism which presses the rolling elements 50 against the inner ring 20 and the outer ring 30 in the radial direction. The pressing mechanism, which will be described in detail later, includes a ring member 40, which faces the outer surface 32b of the annular section 32 of the outer ring 30 while leaving a gap G therebetween. An annular pressure chamber R40 (corresponding to the annular space), which is partitioned, is placed between the annular section 32 and the ring member 40. The rolling motion surface 30a for the rolling elements 50 is formed on the inner surface of the annular section 32. In this configuration, pressurized fluid is supplied to the pressure chamber R40, and thereby diameter-reducing deformation in the radial direction occurs to the annular section 32. This causes the rolling elements 50 to be pushed towards the inner ring 20. Consequently, rolling element 50 is pressed against the annular section 32 of the outer ring 30 and the inner ring 20.

The configuration of the rolling bearing 10 will be described in detail below.

As shown in FIG. 4, the main body of the inner ring 20 is a steel cylindrical body having a perfectly circular cross section. On the outer surface of the inner ring 20, a recessed groove section 20t is formed around the entire circumference along the circumferential direction. The bottom surface 20tb of the groove section 20t serves as a rolling motion surface 20a on which the rolling elements 50 roll. The rolling motion surface 20a is parallel to the axial direction. Since the side walls 20ts and 20ts of the groove section 20t exist on both axial sides of the rolling motion surface 20a, the end surfaces of the rolling elements 50 abut the side walls 20ts and 20ts, which results in restrictions on the axial displacement of the rolling elements 50.

Note that the material of the inner ring 20 is not limited to steel mentioned above. For example, non-ferrous metal such as cemented carbide or non-metal such as ceramic may also be employed.

The outer ring 30 is cylindrical in shape as a whole and has a perfectly circular cross section. More specifically, the outer ring 30 includes: an annular annular section 32 having an inner surface; and the rolling motion surface 30a on which the rolling elements 50 roll; and a fixing section 36 for fixing the outer ring 30 to the housing 3 (corresponding to the supported-object member). The fixing section 36 is an annular projecting section 36 that is connected in an integrated manner with the axial back-end section 32eb of the annular section 32 and projects radially outwardly. The outer ring 30 is fixed onto the housing 3 as follows: for example, the projecting section 36 is fitted into the attachment hole 3h of the housing 3 (FIG. 7) while the outer surface 36a of the projecting section 36 abuts the inner surface of the attachment hole 3h along the entire circumference thereof. In the foregoing condition in which the outer ring 30 is fixed, radial load which acts on the shaft member 5 is transmitted through the inner ring 20 and the rolling elements 50 to the annular section 32 of the outer ring 30 to the fixing section 36; the radial load is transmitted quickly through the fixing section 36 to the housing 3 (See FIG. 7). This allows the housing 3 to securely support radial load which acts on the shaft member 5.

The rolling motion surface 30a of the annular section 32 is formed around the entire circumference of the annular section 32, being parallel to the axial direction. The thickness of the annular section 32 is uniform in at least a part where the rolling motion surface 30a is formed. In the example of FIG. 4, except for the beveled section of the axial front-end section 32ef, the annular section 32 has uniform thickness through the entire length and along the entire circumference thereof. The thickness is calculated based on the following equation 1 and the like, for example. Thus, the annular section 32 is designed so that diameter reduction due to elastic deformation thereof occurs smoothly in the radial direction in accordance with the fluid-supply pressure of pressurized fluid.

As a material of the outer ring 30, steel is desirable. A steel outer ring, because of its mechanical properties, can smoothly undergo diameter reduction due to elastic deformation according to the foregoing fluid-supply pressure. Also, this allows radial load to be securely sustained and transmitted quickly to the housing 3.

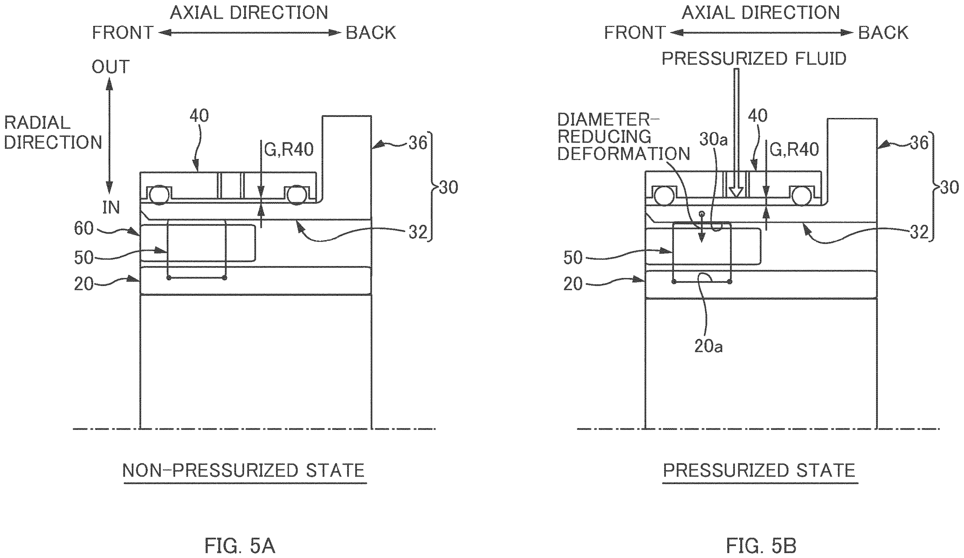

On the outer surface 32b of the annular section 32, provided is a pressing mechanism which presses the rolling elements 50 against the inner ring 20 and the outer ring 30. The main body of the pressing mechanism is the ring member 40 which faces the outer surface 32b of the annular section 32 of the outer ring 30 while leaving a certain gap G therebetween. The annular pressure chamber R40, which is partitioned, is placed between the ring member 40 and the annular section 32. As shown in FIGS. 5A and 5B, the pressurized fluid is thus supplied to the pressure chamber R40, and thereby diameter-reducing deformation occurs to the annular section 32. This causes the rolling motion surface 30a of the annular section 32 to push the rolling elements 50 towards the rolling motion surface 20a of the inner ring 20. Consequently, the rolling elements 50 are pressed against the outer ring 30 and the inner ring 20.

As is apparent from the above description, there is relative displacement of parts which are in metallic contact with each other is almost completely eliminated in the pressing process. Stick-slip behavior is prevented nearly completely. The pressing force between the rolling elements 50 and the outer ring 30 and the inner ring 20 can therefore vary smoothly and quickly as the fluid-supply pressure of the pressurized fluid increases or decreases. Consequently, it is possible to precisely apply the pressing force, which makes it easy and precisely to control preloading (control the pressing force).

As shown in FIG. 4, the ring member 40 is an annular member whose axial length is almost equal to that of the annular section 32. The pressure chamber R40 which is annular in shape is thereby partitioned; the pressure chamber R40 extends through substantially the entire length of the annular section 32 in the axial direction. The cross section of the ring member 40 along the axial direction is a uniform cross section around the entire circumference thereof along the circumferential direction. Thus, uneven displacement at the time of diameter-reducing deformation is prevented nearly completely around the entire circumference thereof. Consequently, pressing forces between the rolling elements 50 and the outer ring 30 and between the rolling elements 50 and the inner ring 20 act substantially evenly around the entire circumference thereof along the circumferential direction.

In both ends of the ring member 40 in the axial direction, packings 47 and 47 (corresponding to the seal member) are provided respectively, which prevent the pressurized fluid from leaking from the pressure chamber R40. More specifically, both ends of the inner surface of the ring member 40 respectively have grooves 40t and 40t formed therein around the entire circumference of the inner surface. Each of the annular packings 47 is inserted in each of the grooves 40t. The packing 47 is placed between the annular section 32 and the ring member 40 in a state in which the packing 47 abuts the outer surface 32b of the annular section 32 and the bottom surface of the groove 40t and the packing 47 is slightly subject to elastic deformation by compression. As a result, the leaking of the pressurized fluid from the pressure chamber R40 is effectively prevented. In addition, because of the packings 47, the annular section 32 and the ring member 40 are held without being in contact with each other. Thus, it is possible to effectively avoid stick-slip behavior caused by contact of the annular section 32 and the ring member 40.

It is preferable that the packing 47 is made of rubber or resin. This makes it possible to certainly avoid the occurrence of stick-slip behavior due to metallic contact. That is, though the annular section 32 and the packing 47 slightly slide when diameter-reducing deformation occurs to the annular section 32 in the foregoing pressing process, stick-slip behavior is less likely to occur because of the packing 47 which is made of rubber or resin. More specifically, though the deformation amount of rubber or resin packing 47 within its elastic deformation will not cause stick-slip behavior, the deformation amount exceeding the elastic deformation, will cause stick-slip behavior. However, stick-slip behavior due to the deformation amount exceeding elastic deformation is practically negligible because the deformation amount is small with respect to elastic deformation of rubber or resin.

It should be noted that the ring member 40 may be made of common metal, as long as the metal is capable of withstanding the fluid-supply pressure of the pressurized fluid.

The pressurized fluid is supplied to the pressure chamber R40 through the fluid-supply hole 40h, which is drilled in the ring member 40. In the example of FIG. 4, the fluid-supply hole 40h is formed extending through the ring member 40 along the radial direction. Pipes, manifold members or the like, which serve as a passageway of the pressurized fluid, connects to the fluid-supply hole 40h from the outside of the ring member 40. This makes it possible to supply the pressure chamber R40 with the pressurized fluid. A single fluid-supply hole 40h alone, as in the example of FIG. 3B, may be provided, and a plurality of fluid-supply holes 40h may also be provided. As the pressurized fluid, hydraulic fluid is usually employed; however, compressed air or any fluid other than them may also be employed.

In the present embodiment, a pump, which serves as the source of the pressurized fluid and is not shown in the drawings, is connected to the passageway of the pressurized fluid. In the passageway, the pressure-regulator valve is placed between the pump and the fluid-supply hole 40h. The pressure-regulator valve adjusts the fluid-supply pressure at which the pressurized fluid is supplied to the pressure chamber R40. By the adjustment of the fluid-supply pressure, pressing force at which the rolling elements 50 are pressed against the outer ring 30 and the inner ring 20 can be adjusted to any desired value.

As mentioned briefly above, the outer ring 30 including the annular section 32 and the fixing section 36 is composed of a single member. That is, the outer ring 30 is not composed of members which are joined by means such as welding. In a case of such a single member, the outer ring 30 can be formed by cutting it from a solid material with a lathe. This makes it possible to simultaneously cut the followings together: the rolling motion surface 30a of the annular section 32; and the outer surface 36a of the fixing section 36, the outer surface 36a of the fixing section 36 serving as the attachment reference surface of the outer ring 30. This allows the rolling bearing 10 having a high running accuracy to be manufactured because the rolling motion surface 30a can be processed so that the surface 30a will be coaxial with the temporary center C30 of the outer ring 30. As shown in FIG. 4, the cross section of the outer ring 30 on one side in the radial direction is L-shaped. Thus, the reference surfaces associated with the inside diameter and outside diameter thereof are apparent, which facilitates the processing.

As shown in the lower section of FIG. 3A, the outer surface 40a of the ring member 40, which is the main body of the pressing mechanism, is located radially inside of the outer surface 36a of the fixing section 36; the outer surface 36a having the largest diameter among the parts of the outer ring 30. And, if an envelope 36v composed of the outer surface 36a of the fixing section 36 and an hypothetical surface of the outer surface 36a extending in the axial direction is defined as the contour surface 10v of the rolling bearing 10, the ring member 40 is filled within the contour surface 10v of the rolling bearing 10. That is, it can be said that the pressing mechanism (the ring member 40) is built into the rolling bearing 10. If the pressing mechanism is built into the rolling bearing 10 as mentioned above, the outer shape of the rolling bearing 10 is able to meet various specifications of general rolling bearings such as standards or industrial standards.

For example, if the contour surface 10v of the rolling bearing 10 is defined as mentioned above, the rolling bearing 10 of the present embodiment has a substantially rectangular cross section similar to that of general rolling bearings, as can be seen from the two-dot-dash line in the lower section of FIG. 3A. More specifically, the inside diameter of the inner ring 20 which determines the inner surface 10i of the rolling bearing 10 is uniform through the entire length in the axial direction, and the outside diameter of the contour surface 10v of the rolling bearing 10 is uniform through the entire length in the axial direction. Both edges of the outer ring 30 are in the same position in the axial direction as both edges of the inner ring 20 are. In addition, the cage 60 does not project beyond both edges of the outer ring 30 in the axial direction, and is axially inside thereof. Thus, as shown in FIGS. 3A and 3B, abutment dimensions of the rolling bearing 10 are determined by the bearing outside diameter D, the bearing inside diameter d, and a width W (axial length W), which are commonly used in the rolling bearing 10. The rolling bearing 10, like the present embodiment, including the pressing mechanism can therefore be used in various apparatuses like machine tools as easily as a standard rolling bearing is used.

As shown in FIG. 4, the rolling elements 50 are preferably placed so that the central position PC50 of each rolling element 50 is located in the opposite side of the fixing section 36 in the axial direction with respect to the central position PCR40 of the pressure chamber R40 in the axial direction (a position forward of the central position PCR40 in FIG. 4). In other words, the rolling elements 50 are preferably arranged at positions away from the fixing section 36 of the outer ring 30. Radial pressing force is therefore applied to the rolling elements 50 due to the diameter-reducing deformation of the portion 32p of the annular section 32 which is remote from the fixing section 36. At this stage, since being remote from the fixing section 36, the foregoing remote portion 32p is less likely to be subject to radial constraining force caused by the supported-object member 3, the constraining force being able to reach the annular section 32 through the fixing section 36. As a result, diameter-reducing deformation occurs to the remote portion 32p substantially evenly through the entire length in the axial direction. This makes it possible to effectively prevent pressing force in the radial direction from causing uneven contact, the pressing force acting on the rolling elements 50. In other words, it is possible to apply the pressing force uniformly with respect to the axial direction. Consequently, it is possible to increase the running accuracy and rotational rigidity of the rolling bearing 10.

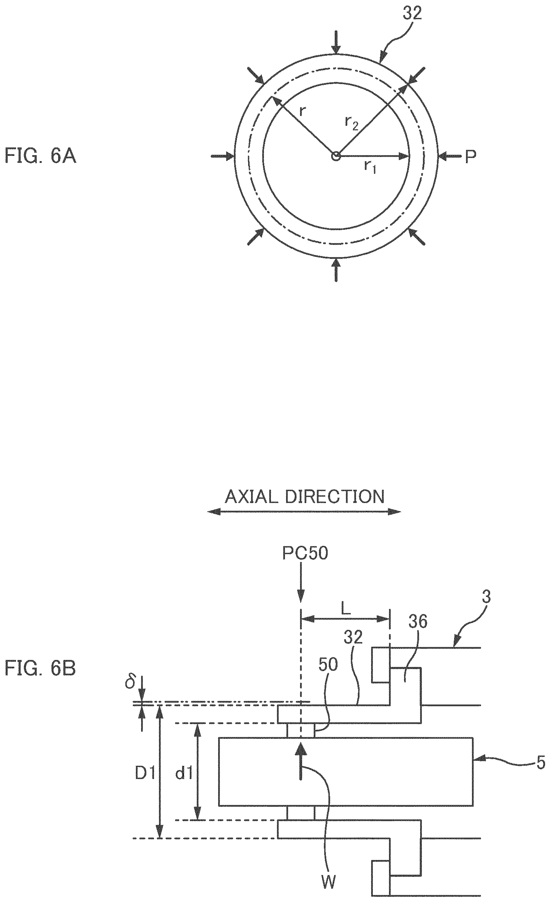

In the previous sections, there is described "the thickness of the annular section 32 is designed so that diameter-reducing deformation can occur according to the fluid-supply pressure of the pressurized fluid". This will be described below. The annular section 32 of the outer ring 30 is able to be modeled as a cylindrical body 32 which is subject to radially inward pressure P illustrated in FIG. 6A. The diameter reduction Z (mm) of the cylindrical body 32 at a position of diameter r is given by the following equation 1.

$$Z = \frac{-P}{E(1-n^2)}\left[(1-V)r+(1+V)\cdot\frac{r_1^2}{r}\right] \quad \ldots (1)$$

The parameters in equation 1 and FIG. 6A are defined as follows: P is pressure (MPa) which acts radially externally on the cylindrical body 32; r1 is the inner diameter (mm) of the cylindrical body 32; r2 is the outer diameter (mm) of the cylindrical body 32; n is the ratio of the inner diameter to the outer diameter (=r1/r2); and E is the modulus of longitudinal elasticity (MPa) of the cylindrical body 32.

For example, substituting pressure resistance of commercial hermetic containers into P in the foregoing equation 1 and substituting r1 into r, the values of r1 and r2 which achieve the diameter reduction Z necessary for pressing are calculated by varying in the parameters r1 and r2. A design value of the thickness of the annular section 32 is consequently obtained as the subtraction value (= r2 - r1).

Conditions necessary to achieve the rolling bearing 10 such as required dimensions of the annular section 32 of the outer ring 30 (the inside diameter and the outside diameter), the diameter reduction Z necessary for pressing, etc. are substituted into the parameters in equation 1, and the value of pressure P satisfying the necessary conditions is calculated. The calculated value of the pressure P falls within the range of pressure resistance of commercial hermetic containers. The diameter reduction Z necessary for pressing is accordingly recognized to have the attainable values.

Together with considering the feasibility of the foregoing diameter reduction Z, whether the rigidity of the annular section 32 is assured or not is also considered. FIG. 6B is the explanatory diagram thereof illustrating a model of the supporting structure in which the shaft member 5 is supported in the housing 3 through the outer ring 30 and the rolling elements 50 of the rolling bearing 10. The deflection amount δ (mm) of the annular section 32 of the outer ring when radial load W(N) acts on the shaft member 5 is given by the following equation 2.

$$\delta = \frac{6.79WL^3}{E(D1^4 - d1^4)} \qquad \ldots (2)$$

The parameters in equation 2 and FIG. 6B are defined as follows: W is radial load (N) which is given to the annular section 32 from the central positions PC50 of the rolling elements 50; L is distance (mm) in the axial direction between the fixing section 36 of the outer ring 30 and the central position PC50 of rolling element 50; E is the modulus of longitudinal elasticity (MPa) of the annular section 32 of the outer ring 30; D1 is the outside diameter (mm) of the annular section 32 of the outer ring 30; and d1 is the inside diameter (mm) of the annular section 32.

Conditions necessary to achieve the rolling bearing 10 such as required dimensions of the annular section 32 of the outer ring 30 of the rolling bearing 10 (the outside diameter D1 and the outside diameter d1), the expected value of radial load W, the distance L between the fixing section 36 of the outer ring 30 and the central position PC50 of any rolling element 50, etc. are substituted into the parameters in equation 2, and the deflection amount δ is calculated. And, if the radial load W is 10000 (N), the deflection amount δ is a few micrometers. The annular section 32 is accordingly recognized to be able to have a sufficient rigidity for practical purposes.

FIG. 7 is a schematic central sectional view of an application example of the rolling bearing 10 of the present embodiment. In this example, the rolling bearing 10 of the present embodiment is applied to a supporting structure in which the shaft 5 serving as the shaft member 5 of a machine tool is supported in the housing 3. In this drawing, one side of the shaft axis C5 in the radial direction (the upper side in FIG. 7) alone is illustrated and the other side is omitted, because the supporting structure is in a mirror image relationship to the shaft axis C5 of the shaft member 5. The shaft axis C5 of the shaft member 5 extends along the axial direction of the rolling bearing 10. Of both ends in the axial direction, the side on which a tool is mounted (the left side in FIG. 7) is hereinafter referred to as the "one-end side", and the opposite side (the right side in FIG. 7) is hereinafter referred to as the "other-end side".

The rolling bearing 10 of the present embodiment is in the category of single-row cylindrical roller bearings as described above. And, the rolling bearing 10 specializes in supporting radial load alone, and cannot support axial load. In this application example, in order to support axial load, a pair of single-row angular contact ball bearings 110 and 110 combine to support the shaft 5 of a machine tool. In such a machine tool, since a tool which is not illustrated is mounted on the one axial end section 5ea of the shaft 5, large radial load acts on the one-end section 5ea. On the one-end side, provided is the cylindrical roller bearing 10, which is the rolling bearing 10 of the present embodiment, and on the other-end side opposite thereto, provided are a pair of single-row angular contact ball bearings 110 and 110.

In the example of FIG. 7, the pair of single-row angular contact ball bearings 110 and 110 are installed in O arrangement. However, this invention is not limited thereto. That is, the pair of single-row angular contact ball bearings 110 and 110 may be installed in X arrangement, in which axial load in both directions can be sustained in the same way as O arrangement. The single-row angular contact ball bearing 110 includes: an inner ring 120; an outer ring 130; and a plurality of spherical rolling elements 150 which contacts both of the inner ring 120 and the outer ring 130 at a certain contact angle α.

The configuration of this application example will be described below.

The housing 3 includes the through hole 3h extending from the one end to the other end along the axial direction; the through hole 3h serves as an accommodating hole 3h which accommodates the shaft member 5, which is the supported object. With the shaft member 5 being accommodated within the through hole 3h, the shaft member 5 is rotatablely supported about the shaft axis C5 thereof by the cylindrical roller bearing 10 and a pair of single-row angular contact ball bearings 110 and 110. the opening 3hea of the through hole 3h exposed to the one-end surface 3ea of the housing 3 is hereinafter referred to as a "first opening 3hea", and the opening 3heb exposed to other-end surface 3eb is hereinafter referred to as a "second opening 3heb".

As shown in FIG. 7, from the first opening 3hea of the housing 3 on the one-end surface 3ea, the outer ring 30 of the cylindrical roller bearing 10 is inserted into the through hole 3h. The inside diameter of the through hole 3h is almost equal to the outside diameter of the fixing section 36 of the outer ring 30, over the range Aea from the first opening 3hea on the one-end side to a certain position in the axial direction. The tolerance of the through hole 3h for fitting is set so that the inner surface of the through hole 3h and the outer surface 36a of the fixing section 36 of the outer ring 30 abut each other along the entire circumference thereof in operation of the apparatus (machine tool). Accordingly, the outer ring 30 inserted into the through hole 3h is fixed in such a manner as not to permit the radial movement relative to the housing 3. A step surface 3hs1 is formed at the certain position of the through hole 3h, where the inside diameter of the through hole 3h is reduced. The other-end surface of the fixing section 36 of the outer ring 30 abuts against the step surface 3hs1. Then, a collar member 4c pushed by a holding member 4a abuts the one-end surface of the fixing section 36 of the outer ring 30 from the side of the first opening 3hea, the holding member 4a being for preventing withdrawal . The outer ring 30 is consequently fixed in such a manner as not to permit the axial movement relative to the housing 3. The holding member 4a is immovably fixed to the housing 3 by means such as screwing, bolting, and the like.

On the other hand, the inner surfaces of the inner ring 20 of the cylindrical roller bearing 10 is fitted to the shaft member 5, which is the supported object. The outside diameter of the shaft member 5 is almost equal to the inside diameter of the inner ring 20, over the range substantially from the other end of the shaft member 5 to a certain position on the one-axial-end side. The tolerance of the shaft member 5 for fitting is set so that the inner surface of the inner ring 20 and the outer surface of the shaft member 5 abut each other along the entire circumference thereof in operation of the apparatus. Accordingly, the inner ring 20 fitted on the shaft member 5 is fixed in such a manner as not to permit the radial movement relative to the shaft member 5. A step surface 5s1 is formed at the certain position of the shaft member 5, where the outside diameter of the shaft member 5 is expanded. The one-end surface of the inner ring 20 abuts the step surface 5s1. Then, the following spacer 9a abuts the other-end surface of the inner ring 20, which causes the inner ring 20 to be fixed in such a manner as not to permit the axial movement relative to the shaft member 5.

From the second opening 3heb of the housing 3 on the other-end surface 3eb, the outer rings 130 of a pair of angular contact ball bearings 110 and 110 are inserted into the through hole 3h. The inside diameter of the through hole 3h is almost equal to the outside diameter of each of the outer rings 130, over the range Aeb from the second opening 3heb to a certain position in the axial direction. The tolerance of the through hole 3h for fitting is set so that the inner surface of the through hole 3h and the outer surface of each outer ring 130 abut each other along the entire circumference thereof in operation of the apparatus. Accordingly, the outer rings 130 inserted into the through hole 3h are fixed in such a manner as not to permit the radial movement relative to the housing 3. A step surface 3hs2 is formed at the certain position of the through hole 3h, where the inside diameter of the through hole 3h is reduced. Of a pair of angular contact ball bearings 110 and 110, as for the bearing 110 which is located on the one-end side, the one-end surface of the outer ring 130 thereof abuts the step surface 3hs2. And, from the side of the second opening 3heb, a holding member 6a for preventing withdrawal abuts the other-end surface of the outer ring 130 of the angular contact ball bearing 110 which is located on the other-end side. The outer rings 130 of a pair of angular contact ball bearings 110 and 110 are consequently fixed in such a manner as not to permit the axial movement relative to the housing 3. The holding member 6a is immovably fixed to the housing 3 by means such as screwing, bolting, and the like. In the illustrated example, an annular collar member 8c is placed between the outer rings 130 and 130, but the collar member 8c is not necessary.

On the other hand, the inner surfaces of the inner rings 120 of a pair of angular contact ball bearings 110 and 110 are fitted to the shaft member 5, which is the supported object. The outside diameter of the shaft member 5 is almost equal to the inside diameter of the inner ring 20, over the range at least from the other end of the shaft member 5 to the certain position. The tolerance of the shaft member 5 for fitting is set so that the inner surface of each inner ring 20 and the outer surface of the shaft member 5 abut each other along the entire circumference thereof in operation of the apparatus. Accordingly, the inner rings 120 fitted on the shaft member 5 are fixed in such a manner as not to permit the radial movement relative to the shaft member 5. A cylindrical spacer 9a is arranged on a portion of the shaft member 5 between the inner ring 20 of the cylindrical roller bearing 10 and the inner ring 120 of angular contact ball bearing 110, and the spacer 9a covers the outer surface of the shaft member 5. The total axial length of the spacer 9a is set to be almost equal to the distance Ls between the abovementioned step surface 3hs1 and step surface 3hs2 of the through hole 3h. The other-end surface of the inner ring 20 of the cylindrical roller bearing 10 therefore abuts the one-end surface of the spacer 9a. Of a pair of the angular contact ball bearings 110 and 110, as for the bearing 110 which is located on the one-end side, the one-end surface of inner ring 120 thereof abuts the other-end surface of the spacer 9a. Further, a suitable holding member 6b for preventing withdrawal abuts a pair of the other-end surface of the inner ring 120 of the angular contact ball bearing 110 which is located on the other-end side, the holding member 6b including a nut member 6n, a collar member 6c and the like. The inner rings 120 is consequently fixed in such a manner as not to permit the axial movement relative to the shaft member 5. The holding member 6b is immovably fixed to the shaft member 5 by means such as screwing and the like. In the illustrated example, a cylindrical collar member 9c is placed between the inner rings 120 and 120, but this collar member 9c between the inner rings 120 and 120 will be omitted if the foregoing annular collar member 8c between the outer rings 130 and 130 is omitted.

As shown in FIG. 7, the ring member 40 serving as the foregoing pressing mechanism is provided outside the annular section 32 of the outer ring 30 of the cylindrical roller bearing 10. As shown in the lower section of FIG. 7, the outer surface 40a of the ring member 40 faces the inner surfaces 4aa and 4ca of the holding member 4a and the collar member 4c which are located inside the through hole 3h of the housing 3; in the illustrated example, an annular gap G3 is provided between the outer surface 40a of the ring member 40 and these inner surfaces 4aa and 4ca. That is, outside the outer surface 40a of the ring member 40, a space SP3 is adjacent in contact around the entire circumference of the outer surface 40a.

The space SP3 serves as a space to allow for diameter expansion of the ring member 40 due to elastic deformation thereof (hereinafter referred to as an acceptable space SP3). That is, when supplying the pressurized fluid to the pressure chamber R40 for applying the pressing force to the rolling elements 50 in the radial direction, the diameter-reducing deformation occurs to the annular section 32 of the outer ring 30, which causes diameter expansion due to elastic deformation to occur to the ring member 40. But, the size of the space SP3 is set in advance so that the diameter expansion due to the elastic deformation will be filled within the acceptable space SP3, and thus the outer surface 40a

of the ring member 40 avoids contacting the inner surface 4aa of the holding member 4a and the inner surface 4ca of the collar member 4c. Outside the outer surface 40a of the ring member 40, there is therefore no member such as the housing 3 which will causes the reaction on the outer surface 40a. When supplying the pressure chamber R40 with the pressurized fluid, the fluid-supply pressure of the pressurized fluid inside the pressure chamber R40 is exactly converted to a radial pressing force. This causes diameter-reducing deformation of the annular section 32 in accordance with the fluid-supply pressure of the pressurized fluid alone; and thus, the diameter-reducing deformation occurs to the annular section 32 substantially evenly around the entire circumference thereof. As a result, the pressing force applied to the rolling elements 50 is substantially even around the entire circumference of the cylindrical roller bearing 10, which can increase the running accuracy and rotational rigidity of the cylindrical roller bearing 10.

Because the outer surface 36a of the fixing section 36 of the outer ring 30 is abutted on and fixed to the inner surface of the through hole 3h of the housing 3 as shown in the figure, the acceptable space SP3 varies in size according to the outside diameter of the fixing section 36. A setting method for forming the foregoing acceptable space SP3 will be therefore described as follows. That is, "when the fixing section 36 is fixed to the housing 3, which is the supported-object member, the outside diameter of the fixing section 36 is set so that the space SP3 to allow for diameter expansion of the ring member 40 due to elastic deformation thereof is formed outside the outer surface 40a of the ring member 40, the space being adjacent to and in contact with the outer surface 40a ".

As mentioned above, the pressurized fluid is supplied to the pressure chamber R40 through the fluid-supply hole 40h which drilled in the ring member 40. On the other hand, the supply of the pressurized fluid to the fluid-supply hole 40h is performed through the following passageway 3k of the pressurized fluid and a flexible tube member 95: the passageway 3k being drilled in the housing 3 and the fixing section 36 of the outer ring 30; and the tube member 95, such as hose, connecting the passageway 3k to the fluid-supply hole 40h of the ring member 40.

=== Other Embodiments ===

While the embodiments according to the invention are described above, the invention is not limited to the embodiments. The invention can be altered as described below without departing from the gist thereof.

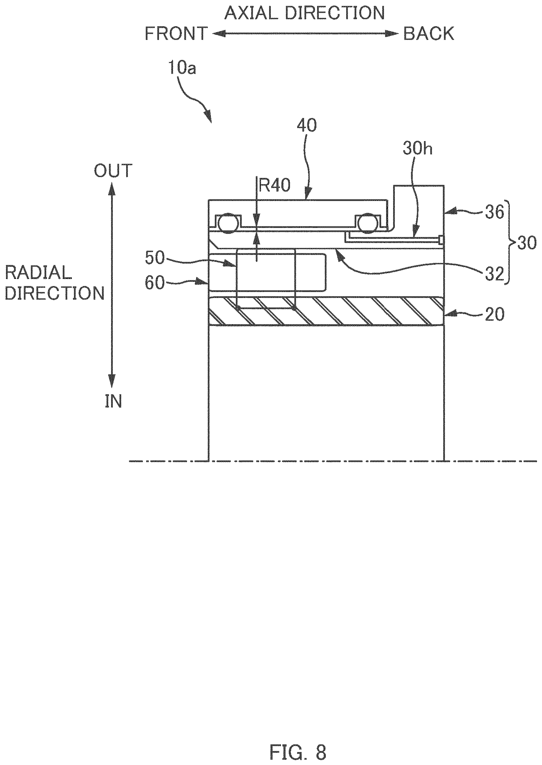

In the foregoing embodiment, as shown in FIG. 4, the fluid-supply hole 40h for the pressurized fluid is placed on the ring member 40. However, this invention is not limited thereto. For example, as shown in the schematic central sectional view of FIG. 8, the following configuration is also acceptable: a passageway 30h communicating with the pressure chamber R40 is drilled in the outer ring 30, and the passageway 30h is used as the fluid-supply hole 30h to supply the pressure chamber R40 with the pressurized fluid.

In the foregoing embodiment, the materials of the rolling elements 50 and the cage 60 are not described. However, the rolling elements 50 may be made of ceramic instead of steel, because the rolling elements 50 is directly affected by centrifugal force during its use. Taking into consideration the effect of centrifugal force and the fact that the load given by the rolling elements 50 is small, the cage 60 may be, on the other hand, made of metal or also non-metal such as plastic, carbon fiber, and the like.

In the foregoing embodiment, the cylindrical roller bearing is provided as an example of the rolling bearing 10, in which the rolling elements 50 are cylindrical. However, this invention is not limited thereto, but is defined by the scope of the following claims. For example, the rolling elements 50 may be spherical; in other words, the invention may be applied to ball bearings (angular contact ball bearings, four-point bearings, deep-groove ball bearings and the like).

Reference Signs List

   3 housing (supported-object member), 3ea one-end surface, 3eb other-end surface,
   3h through hole, 3hea first opening, 3heb second opening,
   3hs1 step surface, 3hs2 step surface, 3k passageway,
   4a holding member, 4aa inner surface,
   4c collar member, 4cainner surface,
   5 shaft (shaft member), 5ea one-end section, 5s1 step surface,
   6a holding member,
   6b holding member, 6c collar member, 6n nut member,
   8c collar member,
   9a spacer, 9c collar member,
   10 cylindrical roller bearing (rolling bearing), 10i inner surface, 10v contour surface,
   20 inner ring, 20a rolling motion surface, 20t groove section,
   20tb bottom surface, 20ts side wall,

30 outer ring, 30a rolling motion surface,
30h passageway,
32 annular section, 32b outer surface, 32ef front-end section,
32eb back-end section (end section),
32p portion located away from the fixing section,
36 fixing section (projecting section), 36a outer surface, 36v envelope,
40 ring member, 40a outer surface, 40h fluid-supply hole,
40t groove,
47 packing (seal member),
50 rolling element,
60 cage, 95 tube member,
C5 shaft axis, C30 temporary center, C50 rotation axis,
G gap, G3 gap,
110 angular contact ball bearing, 120 inner ring, 130 outer ring, 150 rolling element,
R40 pressure chamber (annular space),
SP3 space,
PC50 central position, PCR40 central position,

## Claims

1. A rolling bearing system (10) for supporting a shaft member(5) rotatably in a housing(3), said rolling bearing system (10) comprising:

   a housing (3);
   a shaft member (5);
   an outer ring (30);
   an inner ring (20) which is fixed to the shaft member (5);
   a ring member (40); and
   a plurality of rolling elements (50) that roll while in contact with the outer ring (30) and the inner ring (20) in a radial direction,

   the outer ring (30) comprising a single piece which includes:

   an annular section (32) whose inner surface has a rolling motion surface (30a) on which the rolling elements (50) roll; and
   a projecting section (36)
   that projects radially outwardly while being connected in an integrated manner with an axial end of the annular section (32);

   the ring member (40) being provided radially outside of an outer surface (32b) of the annular section (32),
   the ring member (32) covering the outer surface (32b) around an entire circumference of the outer surface (32b),
   the ring member (32) and the outer surface (32b) partitioning an annular space (G, R40) therebetween,
   the rolling elements (50) being pressed against the outer ring (30) and the inner ring (20) by pressurized fluid supplied to the annular space (G, R40),

   **characterized in that** the projecting section (36) is fixed to the housing (3) so that a radial load, which acts on the shaft member (5), is transmitted to the housing (3) via the projecting section (36), and that the rolling elements (50) are pressed radially against the outer ring (30) and the inner ring (20)by diameter reduction of the annular section (32)due to elastic deformation of the annular section (32) in the radial direction, which elastic deformation is caused by pressure of said pressurized fluid on said outer surface (32b) of the annular section (32).

2. A rolling bearing system (10) according to claim 1, wherein
   the rolling bearing system (10) further comprises an annular seal member (47),

   the annular seal member (47) abutting the annular section (32) and the ring member (40) and is placed between the annular section (32) and the ring member (40),

the annual seal member (47) preventing the pressurized fluid from leaking from the annular space (G, R40),

the annual seal member (47) is arranged in both axial ends of the ring member (40), and
the annual seal member (47) is made of rubber or resin.

**3.** A rolling bearing system (10) according to claim 1 or 2, wherein
a central position (PC50) of each rolling element (50) is located in the opposite side of the projecting section (36) in the axial direction with respect to a central position (PRC40) of the annular space (G, R40) in the axial direction.

**4.** A rolling bearing system according to any one of claims 1 to 3, wherein
diameter expansion due to elastic deformation occurs to the ring member (40) by supplying the pressurized fluid to the annular space (G, R40),
an outer surface (36a) of the projecting section (36) abuts the housing (3) and is fixed to the housing (3), and
an outside diameter (D) of the projecting section (36) is set so that a space (G3, SP3) to allow for diameter expansion of the ring member (40) due to elastic deformation of the ring member (40) is formed radially outside of an outer surface (40a) of the ring member (40), the space (G3, SP3) being adjacent to and in contact with the outer surface (40a) of the ring member (40).


**Patentansprüche**

**1.** Ein Wälzlagersystem (10) zum drehbaren Abstützen eines Wellenelements (5) in einem Gehäuse (3), wobei das Wälzlagersystem (10) umfasst:

ein Gehäuse (3);
ein Wellenelement (5);
einen Außenring (30);
einen Innenring (20), der an dem Wellenelement (5) befestigt ist;
ein Ringelement (40); und
mehrere Wälzkörper (50), die während eines Kontakts mit dem Außenring (30) und dem Innenring (20) in einer radialen Richtung walzen, wobei der Außenring (30) ein einzelnes Stück umfasst, das enthält:

einen ringförmigen Abschnitt (32), dessen Innenfläche eine Wälzbewegungsfläche (30a) aufweist, auf der die Wälzkörper (50) walzen; und
einen vorstehenden Abschnitt (36), der radial nach außen vorsteht, während er auf integrierte Weise mit einem axialen Ende des ringförmigen Abschnitts (32) verbunden ist;

wobei das Ringelement (40) radial außerhalb einer Außenfläche (32b) des ringförmigen Abschnitts (32) vorgesehen ist,
wobei das Ringelement (32) die Außenfläche (32b) um einen gesamten Umfang der Außenfläche (32b) bedeckt,
wobei das Ringelement (32) und die Außenfläche (32b) einen ringförmigen Raum (G, R40) dazwischen abteilen,
wobei die Wälzkörper (50) durch ein unter Druck stehendes Fluid, das dem ringförmigen Raum (G, R40) zugeführt wird, gegen den Außenring (30) und den Innenring (20) gedrückt werden, **dadurch gekennzeichnet, dass** der vorstehende Abschnitt (36) an dem Gehäuse (3) befestigt ist, so dass eine radiale Last, die auf das Wellenelement (5) wirkt, über den vorstehenden Abschnitt (36) auf das Gehäuse (3) übertragen wird, und dass die Wälzkörper (50) durch Durchmesserverringerung des ringförmigen Abschnitts (32) aufgrund einer elastischen Verformung des ringförmigen Abschnitts (32) in radialer Richtung radial gegen den Außenring (30) und den Innenring (20) gedrückt werden, wobei die elastische Verformung durch Druck des unter Druck stehenden Fluids auf die Außenfläche (32b) des ringförmigen Abschnitts (32) verursacht wird.

**2.** Ein Wälzlagersystem (10) nach Anspruch 1, wobei
das Wälzlagersystem (10) ferner ein ringförmiges Dichtungselement (47) umfasst,
das ringförmige Dichtungselement (47) an dem ringförmigen Abschnitt (32) und dem Ringelement (40) anliegt und zwischen dem ringförmigen Abschnitt (32) und dem Ringelement (40) angebracht ist,
das ringförmige Dichtungselement (47) verhindert, dass das unter Druck stehende Fluid aus dem ringförmigen Raum (G, R40) austritt,
das ringförmige Dichtungselement (47) in beiden axialen Enden des Ringelements (40) angeordnet ist, und
das ringförmige Dichtungselement (47) aus Gummi oder Harz besteht.

3. Ein Wälzlagersystem (10) nach Anspruch 1 oder 2, wobei
eine zentrale Position (PC50) jedes Wälzkörpers (50) auf der gegenüberliegenden Seite des vorstehenden Abschnitts (36) in der axialen Richtung in Bezug auf eine zentrale Position (PRC40) des ringförmigen Raums (G, R40) in der axialen Richtung gelegen ist.

4. Ein Wälzlagersystem nach einem der Ansprüche 1 bis 3, wobei
eine Durchmessererweiterung aufgrund der elastischen Verformung an dem Ringelement (40) durch Zuführen des unter Druck stehenden Fluids zu dem ringförmigen Raum (G, R40) auftritt,
eine Außenfläche (36a) des vorstehenden Abschnitts (36) an dem Gehäuse (3) anliegt und an dem Gehäuse (3) befestigt ist, und
ein Außendurchmesser (D) des vorstehenden Abschnitts (36) so eingestellt ist, dass ein Raum (G3, SP3), der die Durchmessererweiterung des Ringelements (40) aufgrund der elastischen Verformung des Ringelements (40) zulässt, radial außerhalb einer Außenfläche (40a) des Ringelements (40) gebildet wird, wobei der Raum (G3, SP3) benachbart und in Kontakt mit der Außenfläche (40a) des Ringelements (40) ist.


## Revendications

1. Système de palier à roulement (10) permettant de supporter un élément d'arbre (5) de manière rotative dans un boîtier (3), ledit système de palier à roulement (10) comprenant :

un boîtier (3) ;
un élément d'arbre (5) ;
un anneau extérieur (30) ;
un anneau intérieur (20) qui est fixé à l'élément d'arbre (5) ;
un élément annulaire (40) ; et
une pluralité d'éléments roulants (50) qui roulent au contact de l'anneau extérieur (30) et de l'anneau intérieur (20) dans une direction radiale,

l'anneau extérieur (30) comprenant une seule pièce qui comporte :

une section annulaire (32) dont la surface intérieure présente une surface de mouvement de roulement (30a) sur laquelle roulent les éléments roulants (50) ; et
une section saillante (36)
qui fait saillie radialement vers l'extérieur tout en étant reliée de manière intégrée à une extrémité axiale de la section annulaire (32) ;

l'élément annulaire (40) étant pourvu radialement à l'extérieur d'une surface extérieure (32b) de la section annulaire (32),
l'élément annulaire (40) recouvrant la surface extérieure (32b) autour d'une circonférence entière de la surface extérieure (32b),
l'élément annulaire (40) et la surface extérieure (32b) séparant un espace annulaire (G, R40) entre eux,
les éléments roulants (50) étant appuyés contre l'anneau extérieur (30) et l'anneau intérieur (20) par un fluide sous pression alimenté à l'espace annulaire (G, R40),

**caractérisé en ce que** la section saillante (36) est fixée au boîtier (3) de sorte qu'une charge radiale, qui agit sur l'élément d'arbre (5), est transmise au boîtier (3) par l'intermédiaire de la section saillante (36), et **en ce que** les éléments roulants (50) sont appuyés radialement contre l'anneau extérieur (30) et l'anneau intérieur (20) par réduction de diamètre de la section annulaire (32) en raison d'une déformation élastique de la section annulaire (32) dans la direction radiale, laquelle déformation élastique étant provoquée par la pression dudit fluide sous pression sur ladite surface extérieure (32b) de la section annulaire (32).

2. Système de palier à roulement (10) selon la revendication 1, dans lequel
le système de palier à roulement (10) comprend en outre un élément d'étanchéité annulaire (47),
l'élément d'étanchéité annulaire (47) étant en butée contre la section annulaire (32) et l'élément annulaire (40), et étant placé entre la section annulaire (32) et l'élément annulaire (40),
l'élément d'étanchéité annulaire (47) empêchant le fluide sous pression de s'échapper de l'espace annulaire (G, R40), l'élément d'étanchéité annulaire (47) étant disposé dans les deux extrémités axiales de l'élément annulaire (40), et

l'élément d'étanchéité annulaire (47) étant en caoutchouc ou en résine.

3. Système de palier à roulement (10) selon la revendication 1 ou 2, dans lequel
une position centrale (PC50) de chaque élément roulant (50) est située du côté opposé de la section saillante (36) dans la direction axiale par rapport à une position centrale (PRC40) de l'espace annulaire (G, R40) dans la direction axiale.

4. Système de palier à roulement selon l'une quelconque des revendications 1 à 3, dans lequel
l'expansion de diamètre due à une déformation élastique se produit sur l'élément annulaire (40) en fournissant le fluide sous pression à l'espace annulaire (G, R40),
une surface extérieure (36a) de la section saillante (36) vient en butée contre le boîtier (3) et est fixée au boîtier (3), et
un diamètre extérieur (D) de la section saillante (36) est défini de sorte qu'un espace (G3, SP3), pour permettre la dilatation du diamètre de l'élément annulaire (40) en raison de la déformation élastique de l'élément annulaire (40), est formé radialement à l'extérieur d'une surface extérieure (40a) de l'élément annulaire (40), l'espace (G3, SP3) étant positionné de manière adjacente à la surface extérieure (40a) de l'élément annulaire (40) et étant en contact avec celle-ci.

AXIAL DIRECTION

3h

3

OUT

6n'

30'

10'

RADIAL
DIRECTION

50'

20'

5

IN

5e

5g

20i'

FIG. 1A

IDEAL RELATIONSHIP
BETWEEN PUSHING
FORCE AND RELATIVE
DISPLACEMENT

Aslip

Ast

PUSHING
FORCE

Aslip

Ast

RELATIVE DISPLACEMENT

FIG. 1B

FIG. 2

AXIAL DIRECTION

FRONT ⟵⟶ BACK

SECTION IV

OUT

RADIAL DIRECTION

IN

B

40h
40
R40,G
30a

30
50
20

60
32

36

10

10i

C50

36v,10v

40a
36a

W

d

**FIG. 3A**

10
36
40
R40,G

32(30)
20

40h
50

C50

CIRCUMFERENTIAL DIRECTION

D

**B-B CROSS SECTION**

**FIG. 3B**

EP 2 860 417 B1

FIG. 4

FIG. 5B

FIG. 5A

FIG. 6A

FIG. 6B

AXIAL DIRECTION

PC50

FIG. 7

EP 2 860 417 B1

FIG. 8

**REFERENCES CITED IN THE DESCRIPTION**

**Patent documents cited in the description**

- JP 8174306 A
- GB 2107002 A